(19) Europäisches Patentamt European Patent Office Office européen des brevets

(11) **EP 4 166 775 A1**

(12) **EUROPEAN PATENT APPLICATION**

(43) Date of publication:
**19.04.2023 Bulletin 2023/16**

(21) Application number: **21203070.4**

(22) Date of filing: **18.10.2021**

(51) International Patent Classification (IPC):
**F02D 41/00** (2006.01)     **F02D 41/14** (2006.01)

(52) Cooperative Patent Classification (CPC):
**F02D 41/0047; F02D 41/0052; F02D 41/1461;**
F02D 2200/0414; F02D 2200/0418; F02D 2250/34;
F02D 2250/36

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Winterthur Gas & Diesel Ltd.**
**8401 Winterthur (CH)**

(72) Inventor: **Tanzer, Alexander**
**78337 Öhningen - Wangen (DE)**

(74) Representative: **Hepp Wenger Ryffel AG**
**Friedtalweg 5**
**9500 Wil (CH)**

(54) **INTERNAL COMBUSTION ENGINE**

(57) The present invention relates to an internal combustion engine (20) and a method for running an internal combustion engine (1).

The internal combustion engine (20), namely a large vessel engine or a stationary engine, comprises at least one cylinder (21) having an inner diameter (22) of at least 200mm. The internal combustion engine (20) comprises a system (1) for exhaust gas recirculation with an EGR path (13) arranged between an exhaust outlet (2) and an air inlet (3) and the internal combustion engine (20) comprises a turbocharger (5).

The system (1) for exhaust gas recirculation comprises at least one first sensor (12) providing a signal representative of the NOx content of exhaust gas leaving the cylinder and a control unit (11) configured to control the amount of exhaust gas recirculated to the air inlet (3) on the basis of the signal from the first sensor (12).

**Fig. 2**

**Description**

The present invention relates to an internal combustion engine comprising a system for exhaust gas recirculation and a method for running an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The engine has at least one cylinder having a piston therein. The piston is connected to a crankshaft. The piston reciprocates between a top dead center (TDC) and a bottom dead center (BDC) during operation of the engine. The cylinder typically has at least one air passage opening for intake, the air inlet in particular arranged in the liner of the cylinder, and at least one air passage opening for exhaust, the exhaust outlet in particular arranged in the cover of the cylinder.

The internal combustion engine can be a longitudinally flushed two-stroke engine.

The term internal combustion engine also refers to large engines which can be operated not only in diesel mode, which is characterised by the self-ignition of the fuel, but also in Otto mode, which is characterised by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquified Biogas), biological Fuels (e. g. Algae fuel or Seaweed Oil), hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing pollutant regulations such as IMO Tier III rules.

The IMO emission standards commonly referred to as Tier I to Tier III standards inter alia define the $NO_x$ emission standards for existing and new marine engines.

For large ships the emissions requirements have been increasing, in particular with regard to the nitrogen oxide emissions. Thus, there is a need to regulate the amount of nitrogen oxides (NOx) in the exhaust gas emitted by the internal combustion engines of these ships.

Selective Catalytic Reduction (SCR) and Exhaust Gas Recirculation (EGR) are the main technologies for Diesel engines to reduce NOx and to achieve Tier III limitations. Whereas SCR reduces NOx after the combustion, EGR reduces the NOx creation.

Too low EGR rates lead to too high NOx emissions and in case of too high EGR rates combustion cannot take place anymore. Soot pollution is a result and is a hazard to the engine.

US10508606B2 shows systems for controlling emissions. A controller may be configured to respond to one or more of intake manifold air temperature, intake air flow rate, or a sensed or estimated intake oxygen fraction by changing an EGR amount to maintain particulate matter and NOx within a range, and then further adjusting the EGR amount based on NOx sensor feedback.

It is an object of the present invention to avoid the drawbacks of the prior art and in particular to provide an internal combustion engine and a method of operating an internal combustion engine with better performance than in prior art engines.

The object is achieved by the internal combustion engines and the method of operating an internal combustion engine according to the independent claims.

The internal combustion engine comprises at least one cylinder having an inner diameter of at least 200mm. The internal combustion engine may be a large vessel engine or a stationary engine.

The internal combustion engine comprises a system for exhaust gas recirculation with an EGR path. The EGR path of the exhaust gas recirculation system leads from the exhaust outlet of the cylinder to the air inlet of the cylinder.

The internal combustion engine further comprises at least one turbocharger having a turbine and a compressor.

The system for exhaust gas recirculation may be a low pressure system, wherein exhaust gas is guidable through the turbine of the turbocharger and at least a part of the exhaust gas subsequently is guidable to the air inlet of the cylinder via the compressor of the turbocharger.

In a low-pressure EGR system the turbocharger is arranged in the EGR path, such that the recirculated exhaust gas contributes to driving the turbocharger.

The EGR path leading from the exhaust outlet of the cylinder to the air inlet of the cylinder includes the turbine of a turbocharger and the compressor of a turbocharger.

Typically, exhaust gas is guidable to the air inlet of the cylinder by the turbocharger mixed with fresh air. Hence, the compressor of the turbocharger sucks in the exhaust gas to be recirculated and fresh air.

Typically, the EGR path comprises a junction, preferably downstream a turbine of a turbocharger, from which the exhaust gas may be guided either towards the air inlet of the cylinder, preferably to a compressor of a turbocharger, or towards an exhaust gas funnel.

Alternatively, the system for exhaust gas recirculation may be a high pressure system, wherein the exhaust gas is guided to the air inlet of the cylinder without passing the compressor, and preferably without passing the turbine of the turbocharger.

The system for exhaust gas recirculation comprises at least one first sensor providing a signal representative of the $NO_x$ content of exhaust gas leaving the cylinder. The term $NO_x$ content may denote an absolute amount of $NO_x$, a $NO_x$ concentration, for example related to the amount of exhaust gas, or a $NO_x$ rate, for example related to the load of the engine.

Preferably, the sensor is configured to provide a signal being related to an amount of $NO_x$ in ppm.

The first sensor may be arranged in the EGR path, preferably downstream and next to the turbine of the turbocharger, because at this point the exhaust gas still is hot. Cooled exhaust gas may comprise more humidity which could cause damage of the sensor.

$NO_x$ content may be determined using UV spectroscopy (for example using a DANFOSS IXA MES 1001 sensor), electrochemical methods (for example using a TESTO 340 or TESTO 350 sensor) or NDIR (for example using a SICK MARSIC 300 sensor). Alternatively, Lambda measurement, IR absorption or chemiluminescence may be used.

The first sensor may be configured to provide a regularly measurement and/or a continuous measurement.

The system for exhaust gas recirculation further comprises a control unit configured to control the amount of exhaust gas recirculated to the air inlet on the basis of the signal from the first sensor. The first sensor may be configured to deliver a signal to the control unit.

The control unit particularly is configured to set the exhaust gas pressure and/or the exhaust gas flowrate in the EGR path.

By setting the exhaust gas pressure and/or the exhaust gas flowrate, the portion of the exhaust gas discharged at the exhaust outlet which is branched off to follow the EGR path and thus the amount of exhaust gas recirculated into the cylinder is determined.

The amount of exhaust gas recirculated to the air inlet, in particular the exhaust gas pressure and/or the exhaust gas flowrate, may be set by operating at least one valve and/or a blower.

Operating a valve means enlarging or reducing the valve opening. Operating a blower means increasing or reducing the blower output.

The amount of exhaust gas recirculated to the air inlet, in particular the exhaust gas pressure and/or the EGR flow rate, may be adjusted in order to achieve a certain $NO_x$ level in the exhaust gas and in order to avoid damages on the system.

The control unit may be configured to reduce the amount of recirculated exhaust gas in case the measured NOx is considered to be too low and to increase the amount of recirculated exhaust gas in case the measured $NO_x$ is considered to be too high.

The direct feedback of $NO_x$ allows the highest accuracy and flexibility regarding unexpected influences.

The air inlet of the cylinder may be a scavenge air receiver. Before entering the scavenge air receiver, the gas may be guided through a scavenge air cooler.

The exhaust outlet of the cylinder may lead to an exhaust gas receiver, where for example the exhaust gas of more than one cylinder is collected.

The EGR path may comprise an exhaust gas cooler and a demister.

Preferably, the control unit is configured to keep the $NO_x$ content within a pre-determined range and/or below a pre-determined value. The control unit may be configured to work in a closed-loop control, wherein the amount of exhaust gas recirculated to the air inlet, for example the exhaust gas pressure and/or the exhaust gas flowrate, is adjusted as long or as soon as the $NO_x$ content is not within a pre-determined range and/or is not below a pre-determined value.

The pre-determined range and/or the pre-determined value may be chosen according to experiences of shop tests.

The pre-determined range and/or below a pre-determined value may be set to comply with limitations given by pollutant regulations.

Limitations according to pollutant regulations may be defined as a NOx rate, whereas the signal provided by the first sensor may relate to an absolute amount. For example, it might be required to keep $NO_x$ below 5.1 g/kWh.

In order to determine significant limitations on bases of pollutant regulations which are compared with signals provided by the first sensor, further parameters may to be taken into account.

The control unit may be configured to set the predetermined range and/or the pre-determined value dependent on ambient conditions, on a scavenging air pressure, on a scavenging air temperature, on a scavenging air humidity, on a compression pressure, on an engine load, on a firing pressure and/or on a working parameter of the turbocharger, preferably to comply with pollutant regulations.

Ambient conditions comprise an ambient temperature, an ambient pressure and/or an ambient humidity.

Working parameters of the turbocharger include a pressure upstream the turbine, a pressure downstream the turbine, a temperature upstream the turbine, a temperature downstream the turbine, a pressure upstream the compressor, a pressure downstream the compressor, a temperature upstream the compressor, a temperature downstream the compressor, a turbine nozzle area, turbine speed, a turbine bypass rate, a status of an additional blower, characteristics of the flow of the turbine.

Additionally, the temperature of the exhaust gas downstream an exhaust gas cooler, the pressure drop along the exhaust gas cooler and/or positions of valves may be taken into account.

The engine may comprise at least one second sensor providing a signal representative of an ambient condition, of a scavenging air pressure, of a scavenging air temperature, of a scavenging air humidity, of a compression pressure, of an engine load, of a firing pressure and/or of a working parameter of the turbocharger.

The second sensor may also provide a signal representative of the temperature of the exhaust gas downstream an exhaust gas cooler, the pressure drop along the exhaust gas cooler and/or positions of valves.

The control unit is preferably configured to receive the signal provided by the second sensor.

The control unit may be configured to use the signal of the second sensor to determine the limiting range and/or the limiting value for the NOx content.

In a beneficial embodiment of the internal combustion engine the control unit is additionally configured to control the amount of exhaust gas recirculated to the air inlet solely on the basis of ambient conditions, a scavenging air pressure, a scavenging air temperature, a scavenging air humidity, a compression pressure, an engine load, a pressure drop over the EGR path, a firing pressure and/or a working parameter of the turbocharger. Additionally, the temperature of the exhaust gas downstream an exhaust gas cooler, the pressure drop along the exhaust gas cooler and/or positions of valves may be taken into account.

The control unit may be configured to control the amount of exhaust gas recirculated to the air inlet solely on the basis of the above cited parameters within a feedback control and/or with a prediction control.

In case a NOx measurement is not available, the control unit may predict a NOx content on the basis of the above cited parameter and set the exhaust gas pressure and/or the exhaust gas flowrate on basis of the predicted NOx content. The control unit may be configured to keep the predicted NOx content within a pre-determined range and/or below a pre-determined value.

The control unit may be configured to receive at least one signal of at least one second sensor providing a signal representative of an ambient condition, of a scavenging air pressure, of a scavenging air temperature, of a compression pressure, of an engine load, of a firing pressure and/or of a working parameter of the turbocharger. The control unit may be configured to keep the signal or a combination of signals within a pre-determined range and/or below a pre-determined value.

The control unit may be configured to use a model which was developed in a shop test. The control unit may comprise a storage device, on which the model is saved and on which access is possible during operation of the engine.

The model may be saved as a template or a map relating values of an ambient condition, of a scavenging air pressure, of a scavenging air temperature, of a compression pressure, of an engine load, of a firing pressure, of a working parameter of the turbocharger, of a temperature of the exhaust gas downstream an exhaust gas cooler, of a pressure drop along the exhaust gas cooler and/or of a position of a valves to a predicted NOx value or to a predetermined range or to a limiting value.

The control unit may be configured to change, preferably automatically, between a first mode, wherein the flow of exhaust gas through the system for exhaust gas recirculation is controlled on the basis of the signal from the first sensor, and a second mode, wherein the flow of exhaust gas through the system for exhaust gas recirculation is controlled solely on the basis of ambient conditions, on scavenging air pressure, on compression pressure, on engine load, on pressure drop over the EGR path, on firing pressure and/or on a working parameter of the turbocharger. In the second mode, the flow of exhaust gas through the system for exhaust gas recirculation is not controlled on the basis of the signal from the first sensor. Thus the control unit does not directly use the $NO_x$ content of exhaust gas leaving the cylinder in the second mode.

In case $NO_x$ measurement is not available or fails or in case the closed loop control basing on $NO_x$ measurement gets unstable, the control unit may be switched to the second mode, for which NOx measurement is not necessary.

The control unit may be configured to detect circumstances, wherein control on basis of $NO_x$ content is not possible or not advisable and may be configured to change mode automatically.

The control unit may be configured to switch off the second mode and/or to switch back to the first mode, for example depending on detected parameters, depending on an input of a user and/or depending of a predetermined period of time.

The control unit may be configured to switch to a Tier II mode, wherein the engine is operated without exhaust gas circulation.

For example during transient conditions a second mode may allow safe load changes using the predictive model only.

The feedback control and the prediction control without $NO_x$ measurement is less accurate than a control based on $NO_x$ measurement. It cannot react to unexpected changes, which were not examined in the shop test.

Hence, the control unit should be configured to switch to the first mode whenever possible. As soon as for example stabile load can be achieved, the first mode is activated again.

The internal combustion engine may comprise an exhaust gas back pressure device, in particular an exhaust back pressure valve, being arranged between the EGR path and an exhaust gas funnel, providing an adaptable back pressure in the EGR path.

The control unit may be configured for controlling the amount of exhaust gas recirculated to the air inlet by setting the exhaust gas pressure via setting the exhaust gas back pressure device.

The exhaust gas back pressure device may be power-actuated, electrically actuated or spring-actuated. Preferably the valve is pneumatically or hydraulically actuated.

The exhaust gas flow restriction device may be arranged between the junction and the exhaust gas funnel.

The more open the exhaust gas back pressure valve, the higher the probability that gas will flow in the direction of the exhaust gas funnel. The more the exhaust gas back pressure valve is closed, the higher is the exhaust pressure in the EGR path and the higher the flow into the EGR path.

Devices for exhaust gas treatment may be arranged between the exhaust gas flow restriction device, for example an exhaust gas back pressure valve, and the funnel.

Additionally or alternatively, the internal combustion engine may comprise a blower, in particular arranged in the EGR path, providing an adaptable pressure in the EGR path. The control unit may be configured for controlling the amount of exhaust gas recirculated to the air inlet by setting the exhaust gas pressure and the exhaust gas flowrate via setting the blower.

The internal combustion engine may comprise a flow control device, in particular an exhaust gas recirculation valve, being arranged in the EGR path, preferably downstream of an exhaust gas cooling device.

The control unit may be configured for controlling the amount of exhaust gas recirculated to the air inlet by setting the exhaust gas flowrate via setting the flow control device.

In case the measured NOx is too high, for example above a pre-determined range, the the amount of exhaust gas recirculated to the air inlet may be increased by closing the exhaust gas back pressure valve upstream of the exhaust funnel and/or by opening the exhaust gas recirculation valve in the EGR path.

If the measured NOx is too low, for example below a pre-determined range or above a pre-determined value, the he amount of exhaust gas recirculated to the air inlet may be decreased by opening the exhaust gas back pressure valve and/or by closing the exhaust gas recirculation valve.

The amount of exhaust gas recirculated to the air inlet corresponds to the EGR rate, which may be determined depending on the $CO_2$ content:

$$\texttt{EGR rate [\%] = 100 } (CO_{2,\texttt{intake}} - CO_{2,\texttt{air}}) / (CO_{2,\texttt{engine out}} - CO_{2,\texttt{air}}).$$

The exhaust gas recirculation valve may be used for lower EGR rates and the back pressure valve for higher EGR rates. The object of the inventions is also achieved by a method of operating an internal combustion engine as described above.

The method comprises the steps of recirculating at least a part of the exhaust gas to the air inlet, providing a signal representative of the NOx content of exhaust gas leaving the cylinder and controlling the amount of exhaust gas recirculated to the air inlet on the basis of the signal by setting the exhaust gas pressure and/or the exhaust gas flowrate.

Preferably, an exhaust gas back pressure device arranged between the EGR path and an exhaust gas funnel and/or a flow control device arranged in the EGR path is set, preferably via a control unit.

The exhaust gas back pressure device may be an exhaust gas back pressure valve arranged between the EGR path and the funnel.

The flow control device preferably is an exhaust gas recirculation valve, preferably arranged downstream an exhausts gas cooling device and directly upstream the compressor of the turbocharger.

The signal representative of the NOx content may be compared with a predetermined range and/or a predetermined value and the amount of exhaust gas through the system for exhaust gas recirculation and hence to the air inlet, may be changed if the signal is not within the predetermined range and/or above the pre-determined value.

The predetermined range and/or above the predetermined value may be chosen in dependence of ambient conditions, of a scavenging air pressure, of a scavenging air temperature, of a compression pressure, of an engine load, of a pressure drop over the EGR path, of a firing pressure, of a working parameter of the turbocharger, of a temperature of the exhaust gas downstream an exhaust gas cooler, of a pressure drop along the exhaust gas cooler and/or of positions of valves.

Additionally, the flow of exhaust gas recirculated to the air inlet may be controlled on the basis of ambient conditions, of a scavenging air pressure, of a scavenging air temperature, of a compression pressure, of an engine load, of a pressure drop over the EGR path, of a firing pressure, of a working parameter of the turbocharger, of a temperature of the exhaust gas downstream an exhaust gas cooler, of a pressure drop along the exhaust gas cooler and/or of positions of valves.

The method may comprise the step of, preferably automatically, changing between a first mode and a second mode.

In the first mode the flow of exhaust gas through the system for exhaust gas recirculation is controlled on the basis of the signal from the first sensor.

In the second mode, the flow of exhaust gas recirculated to the air inlet may be controlled on the basis of ambient conditions, of a scavenging air pressure, of a scavenging air temperature, of a scavenging air humidity, of a compression pressure, of an engine load, of a pressure drop over the EGR path, of a firing pressure, of a working parameter of the turbocharger, of a temperature of the exhaust gas downstream an exhaust gas cooler, of a pressure drop along the exhaust gas cooler and/or of positions of valves.

In the second mode, the flow of exhaust gas recirculated to the air inlet may be controlled on basis of at least one signal of at least a second sensor, providing as signal representing ambient conditions, a scavenging air pressure, a scavenging air temperature, a scavenging air humidity, a compression pressure, an engine load, a pressure drop over the EGR path, a firing pressure, a working parameter of the turbocharger, a temperature of the exhaust gas downstream an exhaust gas cooler, a pressure drop along the exhaust gas cooler and/or positions of valves.

Unless otherwise defined valves comprise an exhaust back pressure valve, being arranged between the EGR path and an exhaust gas funnel, an exhaust gas recirculation valve, being arranged in the EGR path, preferably downstream an exhaust gas cooling device, a shut off valve, arranged in the EGR path preferably upstream an exhaust gas cooling device, and an exhaust waste gate, preferably arranged in a turbine bypass.

The relationship between the set valve position of the exhaust back pressure valve with the EGR rate and the relationship between the exhaust gas recirculation valve with the EGR rate have linear ranges over a wide range of valve positions. Thus, a measurement of the EGR rate is not necessary.

For increasing the EGR rate first the exhaust gas recirculation valve may be opened, while the back pressure valve is fully open. As soon as the exhaust gas recirculation valve is fully opened the back pressure valve may be closed to further increase the EGR rate until the back pressure valve is fully closed.

If the exhaust gas recirculation valve and the back pressure valve are operated sequentially and the back pressure valve starts closing after the exhaust gas recirculation valve is fully open, the dependency of the EGR rate on the valve settings comprises a range of a lower gradient.

The range with a different, that is lower, gradient, occurs while the exhaust gas recirculation valve is almost fully open and the back pressure valve still is open until the exhaust gas recirculation valve is fully open and the back pressure valve starts closing. For example the range with a lower gradient occurs when the opening of the exhaust gas recirculation valve is greater than 50% and before the back pressure vale is closed to an amount of 50%.

Preferably the exhaust gas recirculation valve and the back pressure valve are operated in regions with a similar linear relationship, preferably with a high gradient, over the whole valve setting regime, such that the EGR rate can be controlled more robustly and thus more precisely.

To avoid the range of a different gradient, the valves are operated such that the back pressure valve is already closed, before the exhaust gas recirculation valve is fully open.

Preferably, in order to increase the EGR rate, the control unit provides for opening the exhaust gas recirculation valve and closing the back pressure valve, wherein closing the back pressure valve starts after the exhaust gas recirculation valve has been opened to 50%-100%, preferably to 50%-70%, more preferably to 60%.

Reducing of the EGR rate is achieved in an inverse way, wherein the exhaust gas recirculation valve starts closing before the back pressure valve is fully opened.

Preferably, in order to reduce the EGR rate, the control unit provides for opening the back pressure valve and closing the exhaust gas recirculation valve, wherein closing the exhaust gas recirculation valve starts after the back pressure valve has been opened to 50%-100%, preferably to 50%-70%, more preferably to 60%.

Preferably, when both valves are operated simultanously both valves are operated in the same manner such that the percentages of opening respectively closing change by the same amount simultaneously. That means for example an increase of 10% of the total opening of the exhaust gas recirculation valve is achieved while the opening of the back pressure valve is reduced by 10% of the total opening and vice versa.

In the following, the invention is further explained in embodiments by means of figures. Same reference numbers refer to functionally corresponding features.

Figure 1:    shows a schematic view of a first example of a combustion engine;
Figure 2:    shows a schematic view of a second example of a combustion engine;
Figure 3:    shows a schematic view of a third example of a combustion engine;
Figure 4:    shows a schematic view of a fourth example of a combustion engine;
Figure 5:    shows a schematic view of a fifth example of a combustion engine;
Figure 6:    shows a schematic view of a sixth example of a combustion engine;
Figure 7:    schematically shows the EGR rate in dependence of valve settings.

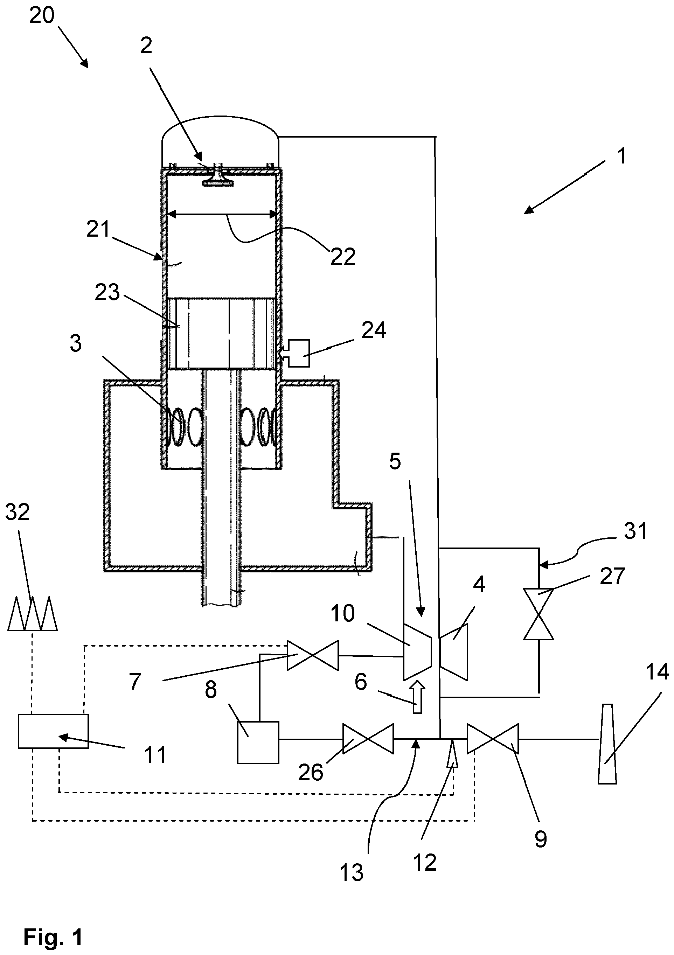

Figure 1 shows a first example of an internal combustion engine 20 comprising a cylinder 21 with a reciprocating piston 23 having an inner diameter 22 of at least 200mm. The internal combustion engine 20 comprises a system 1 for exhaust gas recirculation with an EGR path 13 arranged between an exhaust outlet 2 and an air inlet 3 of the cylinder 21. The internal combustion engine 20 comprises a turbocharger 5 with a turbine 4 and a compressor 10.

The system 1 for exhaust gas recirculation is a low pressure system, wherein the recirculated exhaust gas is guidable to the air inlet 3 of the cylinder 21 via a compressor 10 of the turbocharger 5, where the exhaust gas is mixed with fresh air 6, and at least a part of the recirculated exhaust gas is guidable through a turbine 4 of a turbocharger 5.

Another part of the exhaust gas may bypass the turbocharger 5 and be guided through a turbine bypass 31, when the exhaust waste gate valve 27 is open.

The internal combustion engine 20 may be a dual fuel engine and may comprise a gas admission valve 24.

The system 1 for exhaust gas recirculation comprises a first sensor 12 providing a signal representative of the NOx content of exhaust gas leaving the cylinder 21. The senor is arranged downstream of the turbine 4.

The system 1 for exhaust gas recirculation comprises a control unit 11 configured to control the amount of exhaust gas recirculated to the air inlet 3 on the basis of the signal from the first sensor 12. The control unit 11 is configured to set the exhaust gas pressure and/or the exhaust gas flowrate.

To do so, the control unit 11 may control an exhaust gas recirculation valve 7 arranged in the EGR path 13 downstream of an exhaust gas cooling device 8. The control unit 11 may further control an exhaust back pressure valve 9, being arranged between the EGR path 13 and an exhaust gas funnel 14.

The engine 1 may comprise second sensors 32 for measuring ambient conditions, such as an ambient temperature, an ambient pressure, an ambient humidity.

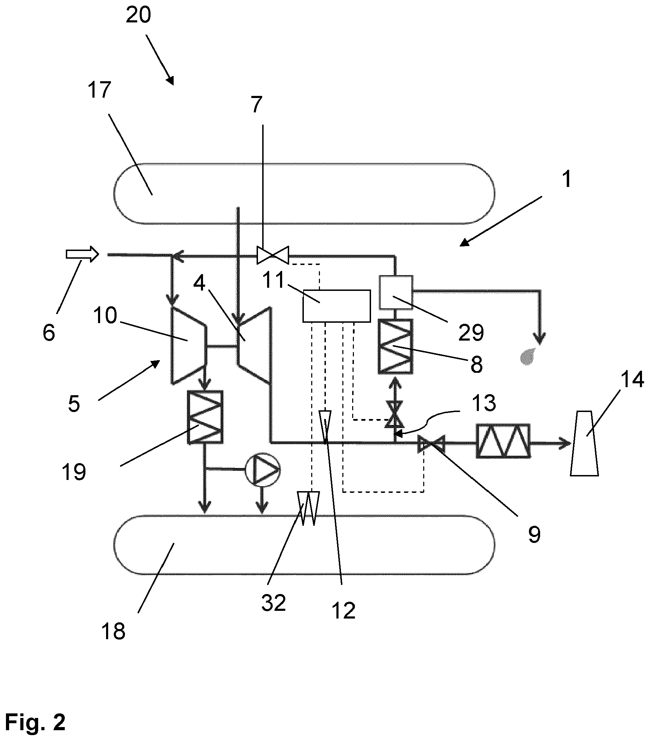

Figure 2 shows a second example of an internal combustion engine similar to the first example.

The exhaust gas is collected in an exhaust gas receiver 17. The EGR path 13 comprises a cooling device 8 and a demister 29. Recirculated exhaust gas and fresh air pass a scavenge air cooler 19 and are guided to a scavenge air receiver 18.

The system 1 for exhaust gas recirculation comprises second sensors 32 for measuring signals being related to a scavenging air pressure and/or to a scavenging air temperature. The signals may be received by the control unit 11.

The first sensor 12 measures the NOx content in ppm in the exhaust gas, located after the turbine 4. The difference of the measured value to a predefined target value for a certain load may be used for a closed-loop control of the EGR rate.

In case the measured NOx value is too high, the EGR rate shall be increased or in case the measured NOx value is too low, the EGR rate can be decreased.

The EGR rate may be adjusted with the help of two valves 7, 9. The exhaust gas recirculation valve 7 is located at the exit of the cooling device 8 or the demister 29, directly upstream the compressor 10. In case the exhaust gas recirculation valve 7 is closed, the EGR rate is 0. There is no flow of exhaust gases through the cooling device 8 and the demister 29. The exhaust gas recirculation valve 7 may be opened and the EGR rate will increase. As soon as the exhaust gas recirculation valve 7 is completely open, the pressure loss over the cooling device 8 and the demister 29 defines the maximum EGR rate for this case.

Usually, the EGR rate is then between 20-30%.

To further increase the EGR rate, exhaust back pressure valve 9 between the EGR path 13 and the funnel 14 can be used to increase the backpressure after the turbine 4 and to increase the flow through the cooling device 8 and the demister 29.

The exhaust back pressure valve 9 is usually completely open. The exhaust back pressure valve 9 shall start to close as soon as the exhaust gas recirculation valve 7 is open to at least 50%, preferably 60%. When exhaust gas recirculation valve 7 is completely open and the exhaust back pressure valve 9 is completely closed, the maximum EGR rate can be achieved.

Typically, the first sensor 12 measures the NOx content in the exhaust gas after the turbine 4 in ppm. The IMO NOx regulations limit the specific NOx emissions in g/kWh.

The calculation for a $NO_x$ limit includes corrections for the humidity [g/kg], the ambient temperature [K] and the scavenging air temperature [°C] in comparison to reference values. It also considers the flow through the engine, proportional to measurements like the scavenging air pressure [bar] and the position of the exhaust waste gate valve 27 [%]. The calculation also considers the power of the engine.

If the emissions are not measured on a wet basis, according to MEPC 58/23/Add.1 Annex 14, chapter 5, the measured concentration $c_d$ shall be converted to a wet basis $c_w$ according to the formula $c_w = k_w\, c_d$. The factor $k_w$ may depend on the absolute humidity of the intake air, the intake air mass flow rate, the fuel mass flow rate, $CO_2$ concentration, CO concentration, the H, N and O content of the fuel. The absolute humidity of the intake air may be determined on the basis of ambient temperature and barometric pressure.

Instead of a measurement of the fuel mass flow rate and the $CO_2$ as well as the CO concentration turbine energy balance may be used.

Additional information, for example the pressure loss over the cooling device 8 and the demister 29 may be provided by further second sensors 32 (not explicitly shown in the figures) and may be used to estimate whether the system behaves like expected and whether the measured NOx value is plausible or not.

The pressure loss over the cooling device 8 and the demister 29 can be measured via difference pressure measurement over the cooling device 8 and the demister 29.

It is also possible to measure over a shut-off valve 26 to exhaust gas recirculation valve 7 or over a certain element of the EGR path 13 that is characteristic for the flow.

If the deviation of the measured pressure loss with respect to the target pressure loss at a certain load is above a predefined value, an adjustment of the valve positions might be necessary to follow.

If the measured pressure loss is too low and the measured NOx is too high or if the measured pressure loss is too high and the measured NOx is too low, it needs to be checked if the pressure measurement is correct and/or the valve positions are set correctly.

If the measurement of the pressure loss is within a predefined range and the NOx measurement deviation exceeds a certain limit, the NOx measurement has to be checked.

In case further adjustments lead to an obviously wrong direction the NOx signal shall not be used as a damage can happen.

In this case, the operator may for example be prompted to switch to the first mode, to change back to the Tier II regime or to a gas mode.

In case the NOx deviation is low (below a predefined limit), control unit 11 may operate in the first mode and the EGR rate may be adjusted on basis of the NOx measurement.

The adjustment of EGR rate may be done in steps. For example a valve position of the exhaust gas recirculation valve 7 is changed to an amount proportional to NOx deviation.

The measurement of NOx is repeated after some time, for example after a few minutes. The valve position is adjusted again if the NOx target value is still not achieved.

In case load changes, the control unit 11 may change into the second mode and switch back to the first mode, wherein the closed loop NOx control is used, as soon as the load is stable again. It may not be needed to measure NOx continuously, only in case a stable load is achieved.

NOx measurements may be provided in defined intervals, for example every 15 min after a final adjustment at a stable load.

The NOx sensor may only be active and the control unit 11 may only operate in the first mode during Diesel mode.

For transients, the closed-loop NOx control may be deactivated. It may be changed to the second mode, wherein a feedforward value can be used temporarily to avoid smoke.

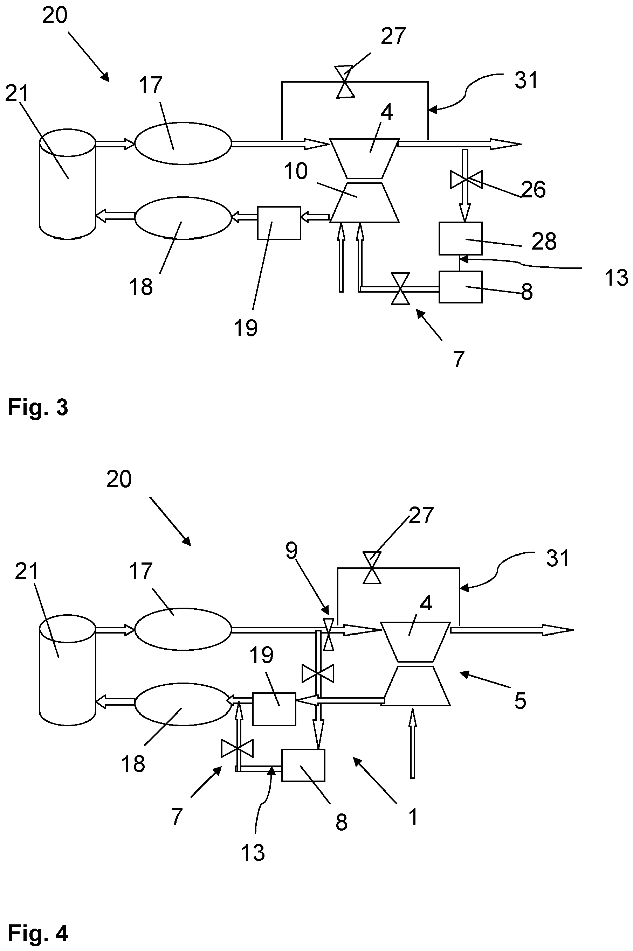

Figure 3 shows a schematic view of a third example of a combustion engine 21 similar to the second example. Instead of an exhaust back pressure valve 9 (see figure 2) a blower 28 is arranged in the EGR path 13.

The blower 28 is operated in analogy to the back pressure valve 9. For increasing the EGR rate, instead of closing the back pressure valve 9 the power of the blower 28 is increased.

Figure 4 shows a schematic view of a fourth example of a combustion engine 21 wherein the system 1 for exhaust gas recirculation is a high pressure system. The EGR Path 13 branches off upstream of the turbine bypass 31 and does not include the turbocharger.

The exhaust gas is mixed with fresh air downstream of the scavenge air cooler 19.

The exhaust back pressure valve 9 is arranged upstream of the turbine bypass 31.

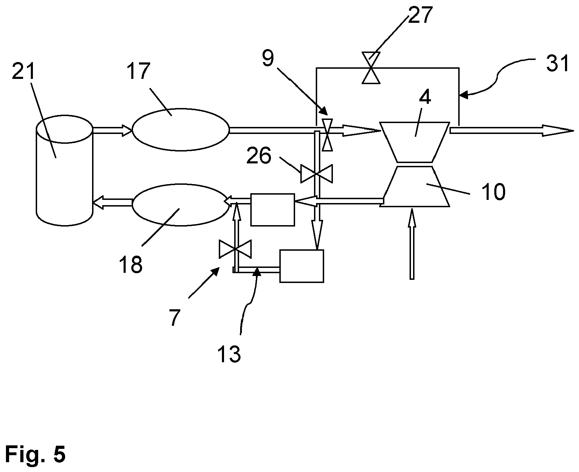

Figure 5 shows a schematic view of a fifth example of a combustion engine 21 similar to the fourth example.

The EGR Path 13 branches off upstream of the turbine 4. The exhaust back pressure valve 9 is arranged downstream of the turbine bypass 31 and upstream of the turbine 4.

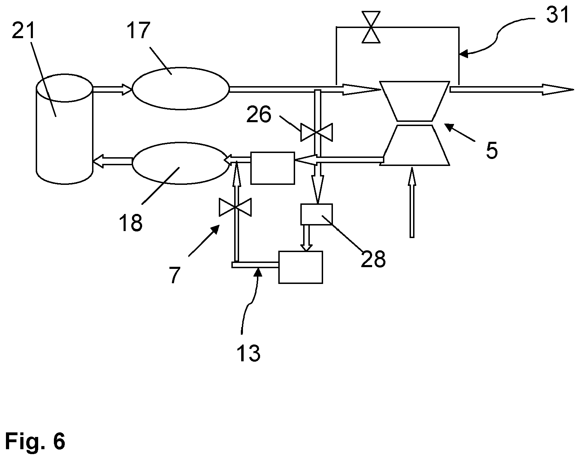

Figure 6 shows a schematic view of a sixth example of a combustion engine 21 similar to the fourth and fifth example. Instead of an exhaust back pressure valve 9 (see figure 4, 5) a blower 28 is arranged in the EGR path 13.

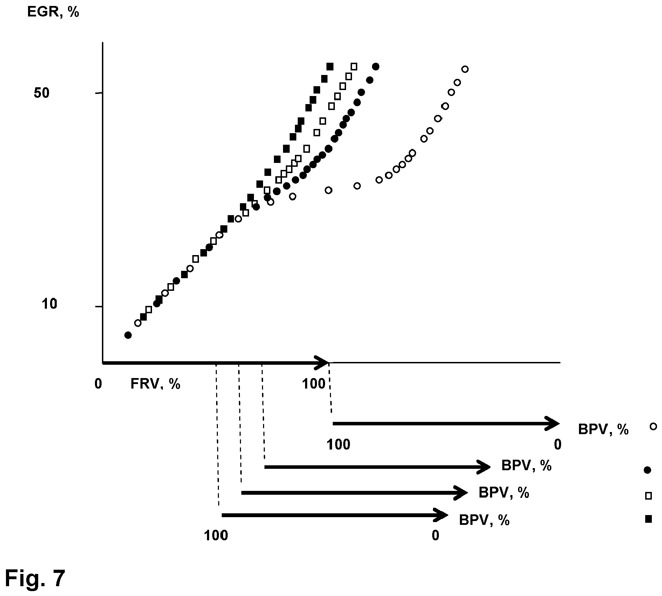

Figure 7 schematically shows the EGR rate in dependence of valve settings.

To raise the EGR rate, first the exhaust gas recirculation valve 7 (see previous figures) and then the back pressure valve 9 (see previous figures) may be closed.

In case the back pressure valve starts closing after the exhaust gas recirculation valve is fully opened, the relation between the EGR rate and the valve settings (shown with open circles) has a flat region.

In case the back pressure valve starts closing after the exhaust gas recirculation valve is opened to 70%, the relation between the EGR rate and the valve settings (shown with closed circles) the flat region becomes smaller.

When the back pressure valve starts closing after the exhaust gas recirculation valve is only opened to 60% (shown with open squares) or even 50% (shown with closed squares), the relation between the EGR rate and the valve settings becomes almost linear over the whole setting range, which starts from a fully closed exhaust gas recirculation valve (FRV, 0%) and a fully open back pressure valve (BPV, 100%) and ends with a fully open exhaust gas recirculation valve (FRV, 100%) and a fully closed back pressure valve (BPV, 0%).

When the valve setting of the exhaust gas recirculation valve and the back pressure valve overlap the EGR rate is sensitive in the same way on the valve setting over the whole setting range. This makes the control concept robust and thus the EGR rate may be set very precisely.

**Claims**

1. Internal combustion engine (20), namely a large vessel engine or a stationary engine, comprising at least one cylinder (21) having an inner diameter (22) of at least 200mm, the internal combustion engine (20) comprising a system (1) for exhaust gas recirculation with an EGR path (13) arranged between an exhaust outlet (2) and an air inlet (3) and

   the internal combustion engine (20) comprising a turbocharger (5),
   **characterized in that**
   the system (1) for exhaust gas recirculation comprises

   - at least one first sensor (12) providing a signal representative of the $NO_x$ content of exhaust gas leaving the cylinder and
   - a control unit (11) configured to control the amount of exhaust gas recirculated to the air inlet (3) on the basis of the signal from the first sensor (12),
   wherein the control unit (11) preferably is configured to set at least one valve and/or a blower .

2. Internal combustion engine (20) according to claim 1 wherein the system (1) for exhaust gas recirculation is a low pressure system, wherein the recirculated exhaust gas is guidable to the air inlet (3) of the cylinder (21) via a compressor (10) of the turbocharger (5) and at least a part of the recirculated exhaust gas is guidable through a turbine (4) of a turbocharger (5).

3. Internal combustion engine (20), according to one of the preceding claims, wherein the control unit (11) is configured to keep the NOx content within a pre-determined range and/or below a pre-determined value.

4. Internal combustion engine (20), according to claim 3, wherein the control unit (11) is also configured to set the predetermined range and/or the pre-determined value dependent on ambient conditions, such as an ambient temperature, an ambient pressure, an ambient humidity, on a scavenging air pressure, on a scavenging air temperature, on a scavenging air humidity, on a compression pressure, on an engine load, on a firing pressure and/or on a working parameter of the turbocharger, preferably to comply with pollutant regulations.

5. Internal combustion engine (20), according to one of the preceding claims, wherein the engine comprises at least one second sensor (32) providing a signal representative of an ambient condition, such as ambient temperature, ambient pressure, ambient humidity, of a scavenging air pressure, of a scavenging air temperature, of a scavenging air humidity, of a compression pressure, of an engine load, of a firing pressure and/or of a working parameter of the turbocharger, and the control unit (11) is preferably configured to receive the signal provided by the second sensor.

6. Internal combustion engine (20), according to one of the preceding claims, wherein the control unit (11) is configured to control the amount of exhaust gas recirculated to the air inlet (3) solely on the basis of ambient conditions, such as ambient temperature, ambient pressure, ambient humidity, a scavenging air pressure, a scavenging air temperature, a scavenging air humidity, a compression pressure, an engine load, a pressure drop over the EGR path (13), a firing pressure and/or a working parameter of the turbocharger, preferably within a feedback control and/or with a prediction control.

7. Internal combustion engine (20), according to claim 6,
wherein the control unit (11) is configured to change, preferably automatically, between a first mode, wherein the flow of exhaust gas through the system (1) for exhaust gas recirculation is controlled on the basis of the signal from the first sensor (12), and a second mode, wherein the flow of exhaust gas through the system (1) for exhaust gas recirculation is controlled solely on the basis of ambient conditions, such as ambient temperature, ambient pressure, ambient humidity, on a scavenging air pressure, on a scavenging air humidity, on a compression pressure, on an engine load, on a pressure drop over the EGR path (13), on a firing pressure and/or on a working parameter of the turbocharger (5).

8. Internal combustion engine (20), according to one of the preceding claims, wherein
the internal combustion engine (20) comprises an exhaust gas back pressure device (9), in particular an exhaust back pressure valve, being arranged between the EGR path (13) and an exhaust gas funnel, providing an adaptable back pressure in the EGR path (13), and the control unit (11) preferably is configured for controlling the amount of exhaust gas recirculated to the air inlet (3) by setting the exhaust gas pressure via setting the exhaust gas back pressure device (9).

9. Internal combustion engine (20), according to one of the preceding claims, wherein
the internal combustion engine (20) comprises a blower (28), in particular arranged in the EGR path, providing an adaptable pressure in the EGR path (13), and the control unit (11) preferably is configured for controlling the amount of exhaust gas recirculated to the air inlet (3) by setting an exhaust gas pressure via setting the blower (28) .

10. Internal combustion engine (20), according to one of the preceding claims, wherein
the internal combustion engine (20) comprises an flow control device (7), in particular an exhaust gas recirculation valve, being arranged in the EGR path (13) and the control unit (11) preferably is configured for controlling the amount of exhaust gas recirculated to the air inlet (3) by setting an exhaust gas flowrate via setting the flow control device (7).

11. Method for running an internal combustion engine (20), according to one of claims 1-10, comprising the steps of

    - recirculating at least a part of the exhaust gas to the air inlet (3);
    - providing a signal representative of the $NO_x$ content of exhaust gas leaving the cylinder;
    - controlling the amount of exhaust gas recirculated to the air inlet (3) on the basis of the signal by setting at least one valve and/or a blower.

12. Method according to claim 11, comprising the steps of setting an exhaust gas back pressure device (9) arranged between the EGR path (13) and an exhaust gas funnel and/or setting a flow control device (7) arranged in the EGR path (13) .

13. Method according to claim 10 or 11, comprising the steps of comparing the signal with a predetermined range and/or a predetermined value and changing the amount of exhaust gas recirculated to the air inlet (3) through the system (1) for exhaust gas recirculation if the signal is not within the predetermined range and/or above the predetermined value.

14. Method according to one of claims 10 to 13, comprising the steps of
controlling the flow of exhaust gas recirculated to the air inlet (3) on the basis of ambient conditions, of a scavenging air pressure, of a scavenging air temperature, of a scavenging air humidity, of a compression pressure, of an engine load, of a pressure drop over the EGR path (13), of a firing pressure and/or of a working parameter of the turbocharger (5).

15. Method according to one of claims 10 to 14, comprising the step of
changing, preferably automatically, between a first mode, wherein the flow of exhaust gas through the system (1) for exhaust gas recirculation is controlled on the basis of the signal from the first sensor (12), and a second mode, wherein the flow of exhaust gas through the system (1) for exhaust gas recirculation is controlled solely on the basis of ambient conditions, of a scavenging air pressure, of a scavenging air temperature, of a scavenging air humidity, of a compression pressure, of an engine load, of a pressure drop over the EGR path (13) of a firing pressure and/or of a working parameter of the turbocharger (5).

**Fig. 1**

**Fig. 2**

**Fig. 3**

**Fig. 4**

**Fig. 5**

**Fig. 6**

Fig. 7

Europäisches
Patentamt

European
Patent Office

Office européen
des brevets

# EUROPEAN SEARCH REPORT

Application Number

EP 21 20 3070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/131181 A1 (HERRMANN OLAF ERIK [DE]) 27 May 2010 (2010-05-27) <br> * paragraph [0002] * <br> * paragraph [0003] * <br> * paragraph [0006] – paragraph [0007] * <br> * paragraph [0009] * <br> * paragraph [0010] * <br> ----- | 1-5, 8-13,15 | INV. <br> F02D41/00 <br> F02D41/14 |
| X | WO 2010/105620 A1 (MAN DIESEL & TURBO AF MAN DIES [DK]; MAYER STEFAN [DK]) 23 September 2010 (2010-09-23) <br> * page 1, lines 1-20 * <br> * page 12, line 21 – page 13, line 2 * <br> * claim 13 * <br> * figures 1-4 * <br> ----- | 1-5, 8-13,15 | |
| X | US 2020/072143 A1 (MISCHLER JAMES ROBERT [US] ET AL) 5 March 2020 (2020-03-05) <br> * paragraph [0011] * <br> * paragraph [0013] * <br> * paragraph [0024] * <br> * paragraph [0044] * <br> * paragraph [0068] – paragraph [0074] * <br> ----- | 1-5, 8-13,15 | TECHNICAL FIELDS SEARCHED (IPC) <br><br> F02D |
| A | EP 3 722 572 A1 (WINTERTHUR GAS & DIESEL LTD [CH]) 14 October 2020 (2020-10-14) <br> * the whole document * <br> ----- | 1-5, 8-13,15 | |
| A | JP 2012 159079 A (MAN DIESEL & TURBO DEUTSCHLAND) 23 August 2012 (2012-08-23) <br> * abstract * <br> ----- | 1-5, 8-13,15 | |

The present search report has been drawn up for all claims

| Place of search | Date of completion of the search | Examiner |
|---|---|---|
| Munich | 11 March 2022 | Wettemann, Mark |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

Europäisches
Patentamt

European
Patent Office

Office européen
des brevets

Application Number

**EP 21 20 3070**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 11-13(completely); 8-10, 15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 21 20 3070

The Search Division considers that the present European patent application does not comply with the
requirements of unity of invention and relates to several inventions or groups of inventions, namely:

```
    1. claims: 1-5, 11-13(completely); 8-10, 15(partially)

        Engine and method for controlling said engine wherein said
        engine comprises an EGR system and said EGR system being
        controlled based on a signal representing a NOx content of
        the engines exhaust gases.
                                 ---

    2-5. claims: 6, 7, 14(completely); 8-10, 15(partially)

        Engine and method for controlling said engine wherein said
        engine comprises an EGR system and said EGR system being
        controlled based solely on conditions, such as (2):
        ambient/scavenging air temperature, pressure, humidity or
        (3) engine compression pressure or engine firing pressure or
        (4) engine load or (5) pressure drop over EGR path/working
        condition of turbocharger.
                                 ---
```

## ANNEX TO THE EUROPEAN SEARCH REPORT
## ON EUROPEAN PATENT APPLICATION NO.

EP 21 20 3070

This annex lists the patent family members relating to the patent documents cited in  the above-mentioned European search report.
The members are as contained in the European Patent Office EDP file on
The European Patent Office is in no way liable for these particulars which are merely given for the purpose of information.

11-03-2022

| Patent document cited in search report | | | Publication date | Patent family member(s) | | | Publication date |
|---|---|---|---|---|---|---|---|
| US 2010131181 | A1 | | 27-05-2010 | CN | 101657624 | A | 24-02-2010 |
| | | | | DE | 112007003446 | A5 | 18-03-2010 |
| | | | | US | 2010131181 | A1 | 27-05-2010 |
| | | | | WO | 2008131789 | A1 | 06-11-2008 |
| WO 2010105620 | A1 | | 23-09-2010 | CN | 102341589 | A | 01-02-2012 |
| | | | | JP | 5014516 | B2 | 29-08-2012 |
| | | | | JP | 2012518748 | A | 16-08-2012 |
| | | | | KR | 20110106934 | A | 29-09-2011 |
| | | | | WO | 2010105620 | A1 | 23-09-2010 |
| US 2020072143 | A1 | | 05-03-2020 | CN | 105545505 | A | 04-05-2016 |
| | | | | CN | 111502839 | A | 07-08-2020 |
| | | | | DE | 102015117878 | A1 | 28-04-2016 |
| | | | | US | 2016115883 | A1 | 28-04-2016 |
| | | | | US | 2020072143 | A1 | 05-03-2020 |
| EP 3722572 | A1 | | 14-10-2020 | CN | 111810322 | A | 23-10-2020 |
| | | | | EP | 3722572 | A1 | 14-10-2020 |
| | | | | JP | 2020172928 | A | 22-10-2020 |
| | | | | KR | 20200120875 | A | 22-10-2020 |
| JP 2012159079 | A | | 23-08-2012 | CN | 102619615 | A | 01-08-2012 |
| | | | | DK | 177388 | B1 | 04-03-2013 |
| | | | | JP | 5661658 | B2 | 28-01-2015 |
| | | | | JP | 2012159079 | A | 23-08-2012 |
| | | | | KR | 20120088590 | A | 08-08-2012 |

EPO FORM P0459

For more details about this annex : see Official Journal of the European Patent Office, No. 12/82

**EP 4 166 775 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10508606 B2